# EUROPEAN PATENT APPLICATION

(11) **EP 4 803 992 A1**
(43) Date of publication of application: **09.09.2026**
(21) Application number: 24899522.7
(22) Date of filing: 29.10.2024
(51) Int. Cl.: G06F 3/0481

(54) **INTERFACE INTERACTION CONTROL METHOD AND APPARATUS, WEARABLE DEVICE, AND STORAGE MEDIUM**

(30) Priority: 06.12.2023 CN 202311670972
(71) Applicant: Meta-Bounds Inc., Zhuhai, Guangdong 519000 (CN)
(72) Inventor: HUANG, Yiran, Zhuhai, Guangdong 519000 (CN)
(74) Representative: Osterhoff, Utz
(86) International application number: PCT/CN2024/128249
(87) International publication number: WO 2025/118879

(57) **Abstract**

The present application provides a method and a device for controlling interface interaction, a wearable device, and a computer-readable storage medium. The method includes: (201), displaying a virtual scene image; (202), displaying a cursor of the cursor control device on the cursor interaction interface of the screen based on a current ray interaction point; and (203), controlling the cursor to move from the current ray interaction point to a target ray interaction point when the cursor control device moves. The present application can enhance the intuitiveness of interactions and improve operation efficiency.

## Description

### CROSS-REFERENCE TO RELATED APPLICATIONS

The present application is claims priority to Chinese Patent Application No. 202311670972.7, filed on December 6, 2023, the entire contents of which are incorporated herein by reference.

### TECHNICAL FIELD

The present application relates to the technical field of interface interaction processing, and in particular to a method and a device for controlling interface interaction, a wearable device, and a computer-readable storage medium.

### BACKGROUND

In recent years, wearable devices have become increasingly popular. To better meet people's interactive needs, the cursor control device (such as a ring) can be used to control the cursor position on the screen of the wearable device, like the smart glasses. However, in the related art, it is difficult for a user to perceive a change pattern of a cursor position, resulting in low intuitiveness of interface interaction and, accordingly, relatively low efficiency of interface interaction operations.

### SUMMARY

The present application provides a method and a device for controlling interface interaction, a wearable device, and a computer-readable storage medium, which can improve the intuitiveness and efficiency of interface interaction operations.

In a first aspect, the present application provides a method for controlling interface interaction, which includes:
displaying a virtual scene image; where the virtual scene image includes a cursor interaction interface and a virtual ray of a cursor control device;
displaying a cursor of the cursor control device on the cursor interaction interface based on a current ray interaction point; where the current ray interaction point is an intersection point between the virtual ray at a current display position and the cursor interaction interface; and
controlling the cursor to move from the current ray interaction point to a target ray interaction point when the cursor control device moves.

In a second aspect, the present application provides a device for controlling interface interaction, including:
a display unit, configured to display a virtual scene image; where the virtual scene image includes a cursor interaction interface and a virtual ray of a cursor control device; and
a control unit, configured to display a cursor of the cursor control device on the cursor interaction interface based on a current ray interaction point; where the current ray interaction point is an intersection point between the virtual ray positioned at a current display position and the cursor interaction interface; and the control unit is further configured to control the cursor to move from the current ray interaction point to a target ray interaction point when the cursor control device moves.

In a third aspect, the present application provides a wearable device including a processor and a memory, and the memory stores a computer program. When the processor executes the computer program stored in the memory, the processor implements the method for controlling interface interaction as mentioned above.

In a fourth aspect, the present application provides a computer-readable storage medium storing a computer program. When a processor executes the computer program, the processor implements the method for controlling interface interaction as mentioned above.

In the present application, a virtual scene image including a cursor of a cursor control device is displayed, and the cursor of the cursor control device is displayed on a cursor interaction interface based on a current ray interaction point. When the cursor control device moves, the cursor is controlled to move from a current ray interaction point to a target ray interaction point, such that the cursor is displayed at an intersection point between a virtual ray and the cursor interaction interface. Accordingly, the user can perceive that the virtual ray moves along with the cursor control device, and the cursor position changes with the ray interaction point, so as to enable the user to perceive a variation rule of the cursor position, improving intuitiveness of interface interaction and efficiency of interaction operations.

### BRIEF DESCRIPTION OF THE DRAWINGS

To more clearly illustrate technical solutions in the embodiments of the present application, the following will briefly introduce the drawings that need to be used in the description of the embodiments. Obviously, the drawings in the following description are some embodiments of the present application. For those skilled in the art, without creative effort, other drawings can be obtained according to these drawings.
FIG. 1 is a structural schematic block diagram of a wearable device according to an embodiment of the present application.
FIG. 2 is a flowchart illustrating a method for controlling interface interaction according to an embodiment of the present application.
FIG. 3 is a schematic diagram of a virtual scene image according to an embodiment of the present application.
FIG. 4 is another schematic diagram of the virtual scene image according to an embodiment of the present application.
FIG. 5 is a schematic diagram of a ray reference coordinate system according to an embodiment of the present application.
FIG. 6 is a schematic diagram of a scene showing a cursor movement process according to an embodiment of the present application.
FIG. 7 is a schematic diagram showing states of a target interactive object when a ray interaction point is positioned at different positions, according to an embodiment of the present application.
FIG. 8 is a schematic diagram showing a process in which a cursor is automatically snapped to an interactive object during interface interaction, according to an embodiment of the present application.
FIG. 9 is a schematic structural diagram of a device for controlling interface interaction according to an embodiment of the present application.

### DETAILED DESCRIPTION OF THE EMBODIMENTS

The technical solutions of the embodiments of the present application will be described in detail below with reference to the accompanying drawings of the present application. It is obvious that the embodiments described are some rather than all of the embodiments of the present application. All other embodiments obtained by those skilled in the art based on the embodiments of the present application without creative efforts shall fall within the claimed scope of the present application.

The flowcharts shown in the accompanying drawings are merely illustrative and do not necessarily include all content and operations/steps, nor do they necessarily have to be performed in the described order. For example, some operations/steps can be decomposed, combined, or partially merged; therefore, the actual execution order may change according to the actual situation.

In the description of the embodiments of the present application, it should be understood that the terms "first" and "second," in the present application are merely for descriptive purposes, and cannot be understood as indicating or suggesting relative importance or impliedly indicating the number of the indicated technical feature. Therefore, the feature associated with "first" or "second" can expressly or impliedly include one or more of such features. In the description of the embodiments of the present application, unless otherwise explicitly specified, the term "multiple" means two or more.

To enable any person skilled in the art to implement and use technical solutions of the present application, the following description is provided. Details are illustrated in the following for explanation. Understandably, those skilled in the art will recognize that the present application can be implemented without using these specific details. In other instances, well-known processes will not be described in detail to avoid obscuring description of the embodiments of the present application. Therefore, the present application is not limited to the illustrated embodiments, but is consistent with the broadest scope of the principles and features disclosed in the embodiments of the present application.

The present application provides a method and a device for controlling interface interaction, a wearable device, and a computer-readable storage medium. The device for controlling interface interaction can be integrated into the wearable device. The wearable device can be smart glasses, a smart helmet, and the like. Smart glasses can be augmented reality (AR) glasses, virtual reality (VR) glasses, and the like. The smart helmet can be an AR helmet, and the like.

The execution entity of the method for controlling interface interaction in the present application can be the device for controlling interface interaction in the present application, or a wearable device integrating the device for controlling interface interaction. The device for controlling interface interaction can be implemented via hardware or software.

Some embodiments of the present application will be described in detail below with reference to the accompanying drawings. The embodiments described below and features of the embodiments may be combined with each other as long as no conflict exists.

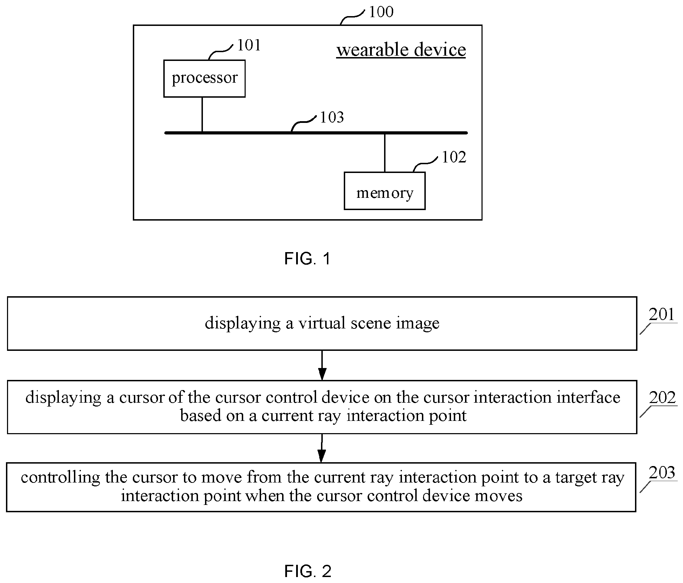

FIG. 1 is a structural schematic block diagram of a wearable device according to an embodiment of the present application.

As shown in FIG. 1, the wearable device 100 includes a processor 101 and a memory 102. The processor 101 and the memory 102 are connected to each other via a bus 103, such as an inter-integrated circuit (I2C) bus.

The processor 101 is configured to provide computing and control capabilities to support operation of the entire wearable device 100. The processor 101 may be a central processing unit (CPU), or may be another general-purpose processor, a digital signal processor (DSP), an application specific integrated circuit (ASIC), a field-programmable gate array (FPGA), or other programmable logic devices, discrete gate or transistor logic devices, or discrete hardware components. The general-purpose processor may be a microprocessor, or may be any conventional processor.

The memory 102 may be a Flash memory, a read-only memory (ROM), a magnetic disk, an optical disk, a USB flash drive, or a removable hard disk.

It should be understood by those skilled in the art that the structure shown in FIG. 1 is merely a block diagram of a portion of the structure relevant to the solutions of the embodiments of the present application, and does not constitute a limitation on the wearable device to which the solutions of the embodiments of the present application are applied. The wearable device may include more or fewer components than those shown in the drawings, or some components may be combined, or different arrangements of components may be used.

The processor 101 is configured to run a computer program stored in the memory 102. When executing the computer program, the processor 101 is configured to implement any of the method for controlling interface interactions in the embodiments of the present application. For example, the processor 101 is configured to run a computer program stored in memory 102. When executing the computer program, the processor 101 can perform the following steps:
displaying a virtual scene image; where the virtual scene image includes a cursor interaction interface and a virtual ray of a cursor control device; displaying a cursor of the cursor control device on the cursor interaction interface based on a current ray interaction point; where the current ray interaction point is an intersection point between the virtual ray at a current display position and the cursor interaction interface; and controlling the cursor to move from the current ray interaction point to a target ray interaction point when the cursor control device moves.

In some embodiments, the processor 101 is configured to run a computer program stored in memory 102. When executing the computer program, the processor 101 can perform the following steps:
when the cursor control device moves, obtaining a first movement angle and a first movement direction of the cursor control device; determining a second movement angle of the virtual ray of the cursor control device based on the first movement angle and a preset angle relationship; determining a second movement direction of the virtual ray based on the first movement direction and a preset direction relationship; and controlling the virtual ray to move based on the second movement angle and the second movement direction.

In some embodiments, the processor 101 is configured to run a computer program stored in memory 102. When executing the computer program, the processor 101 can perform the following steps:
controlling the virtual ray to move based on movement data of the cursor control device; where the target ray interaction point corresponds to an intersection point between the virtual ray at a position after moving and the cursor interaction interface.

In some embodiments, the processor 101 is configured to run a computer program stored in memory 102. When executing the computer program, the processor 101 can perform the following steps:
controlling the virtual ray to move from the current display position along the second movement direction, until an angle between a position of the virtual ray after moving and the current display position of the virtual ray reaches the second movement angle.

In some embodiments, the processor 101 is configured to run a computer program stored in memory 102. When executing the computer program, the processor 101 can perform the following steps:
in response to triggering a reset instruction of the cursor control device, moving the cursor to a preset initial position on the cursor interaction interface; where when the cursor is positioned at the preset initial position, the virtual ray is positioned at a preset default position, and an intersection point between the virtual ray at the default position and the cursor interaction interface corresponds to the preset initial position.

In some embodiments, the processor 101 is configured to run a computer program stored in memory 102. When executing the computer program, the processor 101 can perform the following steps:
determining a target interactive object closest to the target ray interaction point on the cursor interaction interface; and when a distance between the target ray interaction point and the target interactive object is less than a preset distance threshold, controlling the cursor to move to the target interactive object; where the target interactive object includes at least one of a control, text, or a functional area.

In some embodiments, the target interactive object is the functional area; the functional area includes a plurality of functional sub-areas. The processor 101 is configured to run a computer program stored in memory 102. When executing the computer program, the processor 101 can perform the following steps:
determining a target functional sub-area closest to the target ray interaction point among the plurality of functional sub-areas of the functional area; and controlling the cursor to move to the target functional sub-area.

In some embodiments, the processor 101 is configured to run a computer program stored in memory 102. When executing the computer program, the processor 101 can perform the following steps:
when a duration of the cursor remaining at the target ray interaction point exceeds a preset duration, controlling the cursor to move to a preset resting position on the cursor interaction interface.

In some embodiments, the processor 101 is configured to run a computer program stored in memory 102. When executing the computer program, the processor 101 can perform the following steps:
when the ray interaction point is not positioned on an interactive object of the cursor interaction interface, displaying the interactive object in a first display state; or when a duration of the ray interaction point remaining on an interactive object of the cursor interaction interface exceeds a preset hovering duration, displaying the interactive object in a second display state; where at least one of a size, a color, or a style of the interactive object in the second display state differs from a corresponding one in the first display state; or when the ray interaction point is positioned on an interactive object of the cursor interaction interface and the interactive object is triggered, displaying the interactive object in a third display state; where at least one of a size, a color, or a style of the interactive object in the third display state differs from a corresponding one in the second display state.

Those skilled in the art will understand that, for the convenience and brevity of description, the specific working process of the wearable device may refer to the corresponding process described in the embodiments of the method for controlling interface interaction, and details in the embodiments are not described herein again.

The following will use the wearable device shown in FIG. 1 as the execution subject for the method for controlling interface interaction in the embodiments of the present application as an example to provide a detailed description of the method for controlling interface interaction in the embodiments of the present application. For simplification and ease of description, this execution subject will be omitted in subsequent method embodiments. Understandably, the scenario in FIG. 1 is used to explain the method for controlling interface interaction in the embodiments of the present application, but does not constitute a limitation on the application scenario of the method for controlling interface interaction in the embodiments of the present application.

As shown in FIG. 2, FIG. 2 is a flowchart illustrating a method for controlling interface interaction according to an embodiment of the present application. This method includes steps 201 to 203.

201, displaying a virtual scene image.

The virtual scene image includes a cursor interaction interface and a virtual ray of a cursor control device.

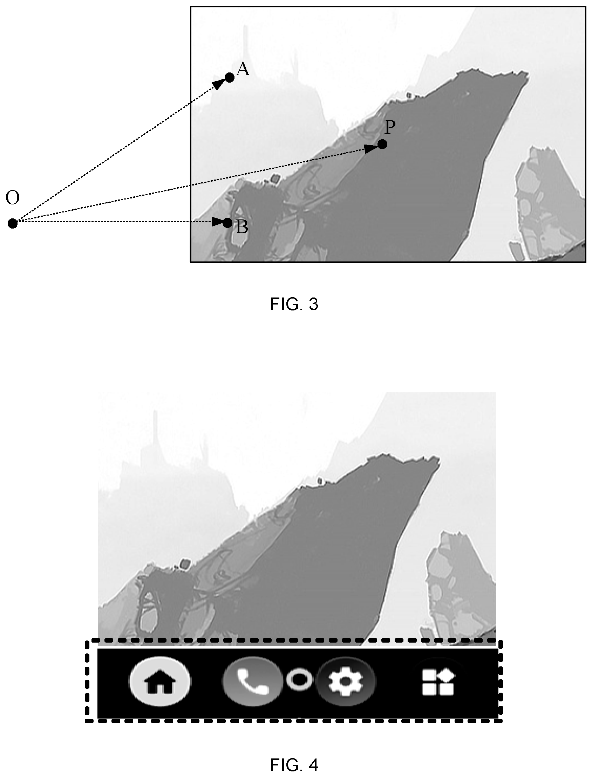

The cursor interaction interface is a user interface that allows interaction of a cursor. In some embodiments, the cursor interaction interface can be the entire virtual scene image; for example, as shown in FIG. 3, the rectangular area in FIG. 3 represents the virtual scene image displayed by the AR glasses. The entire virtual scene image can be interacted with via a cursor, and therefore the entire virtual scene image may serve as a cursor interaction interface. In other embodiments, the cursor interaction interface can be a portion of a virtual scene image. For example, as shown in FIG. 4, FIG. 4 is a schematic diagram of a virtual scene image, the dashed rectangle area in FIG. 4 is interactive with the cursor. Therefore, the dashed rectangle area in the virtual scene image is used as the cursor interaction interface.

The cursor control device is the device that generates the cursor for interaction on the cursor interaction interface. For example, the cursor control device can be a ring, a watch, and the like.

In an embodiment, the virtual scene image can be displayed through a wearable device. This virtual scene image can be a game screen, a video screen, and the like. This embodiment does not limit the specific content of the virtual scene image. For example, a game screen can be displayed through AR glasses.

The wearable device can be smart glasses, smart helmets, and the like. Smart glasses can be augmented reality (AR) glasses, virtual reality (VR) glasses, and the like. Smart helmets can be AR helmets, and the like.

202, based on the current ray interaction point, displaying the cursor of the cursor control device on the cursor interaction interface.

To facilitate a better understanding of the embodiments of the present application, some terms involved in the embodiments are first described below.
1. Ray origin: the origin of the virtual ray, and can be any point outside the plane of the cursor interaction interface. In this embodiment, to more accurately simulate cursor movement, the ray origin is a preset fixed point. For example, as shown in FIG. 3, point O in FIG. 3 represents the ray origin.
2. Virtual ray: a ray extending from a ray starting point toward any position on a cursor interaction interface; the ray being a virtual ray of a cursor control device. For example, as shown in FIG. 3, the ray OA, which intersects the cursor interaction interface at point A, can be used as a virtual ray, and the ray OB, which intersects the cursor interaction interface at point B, can also be used as a virtual ray. In this embodiment, the cursor control device moves to control the virtual ray to move, so as to change the position of the intersection point between the virtual ray and the cursor interaction interface, and achieving cursor control.
3. Ray interaction point: the intersection point between the virtual ray and the cursor interaction interface. In this embodiment, the display position of the cursor on the cursor interaction interface is the position of the ray interaction point. Therefore, the display position of the cursor on the cursor interaction interface changes with the change of the ray interaction point. By controlling the movement of the virtual ray, cursor movement can be controlled. For example, as shown in FIG. 3, since the intersection point between the ray OA and the cursor interaction interface in FIG. 3 is point A, the cursor position is point A when the virtual ray is located at the ray OA; since the intersection point between the ray OB and the cursor interaction interface in FIG. 3 is point B, the cursor position is point B when the virtual ray is located at the ray OB. In this way, the cursor position can be continuously adjusted based on the ray interaction point (namely, the intersection point between the virtual ray and the cursor interaction interface).
4. Preset initial position of the cursor: the default position of the cursor on the cursor interaction interface.
5. Default position of the virtual ray: the position of the virtual ray when the cursor is located at the preset initial position. For example, as shown in FIG. 3, assuming the preset initial position of the cursor is the center point P on the cursor interaction interface, the default position of the virtual ray can be set as a position of a ray extending from a ray starting point O toward a center point P on the cursor interaction interface.

The current ray interaction point is the intersection point between the virtual ray at the current display position and the cursor interaction interface.

203, when the cursor control device moves, controlling the cursor to move from the current ray interaction point to the target ray interaction point.

The virtual ray moves based on the movement data of the cursor control device, and the target ray interaction point is the intersection point between the virtual ray at the position after moving and the cursor interaction interface. For example, when the cursor control device moves, the virtual ray moves along with the cursor control device, causing the intersection point between the virtual ray and the cursor interaction interface to change. This allows the cursor to move from the current ray interaction point to the target ray interaction point.

The method for controlling interface interaction may further include: controlling the virtual ray to move based on movement data of the cursor control device. For example, there is a preset angle relationship between the movement angle of the virtual ray and the movement angle of the cursor control device; and there is a preset direction relationship between the movement direction of the virtual ray and the movement direction of the cursor control device. In this case, the virtual ray movement can be controlled using steps A1 to A4 as follows.

A1, when the cursor control device moves, obtaining the first movement angle and the first movement direction of the cursor control device.

The first movement angle refers to the movement angle of the cursor control device. For example, if the cursor control device is a ring and the user's hand wearing the ring rotates 1° to the left, then the first movement angle of the ring is 1°.

The first movement direction refers to the movement direction of the cursor control device. For example, if the cursor control device is a ring, and the user's hand wearing the ring rotates 1° to the left, then the first movement direction of the ring is to the left.

Herein, "leftward" is merely an example provided for ease of understanding. It should be understood that an inertial measurement unit (IMU) may be integrated into the cursor control device to detect whether the cursor control device moves. When the cursor control device moves, the IMU measures a three-axis angular velocity and a three-axis acceleration of the cursor control device, and a first movement angle and a first movement direction of the cursor control device are calculated based thereon. For example, the first movement angle and the first movement direction of the cursor control device may be represented in a coordinate system of the IMU integrated in the cursor control device. For example, in the coordinate system of the IMU, the first movement angle and the first movement direction of the cursor control device may be represented by rotation angles of the cursor control device relative to the x-axis, the y-axis, and the z-axis.

A2, determining a second movement angle of the virtual ray of the cursor control device based on the first movement angle and a preset angle relationship.

The virtual ray is configured to reflect movement of the cursor control device, and a position of the virtual ray changes along with the movement of the cursor control device, so as to change a position of an intersection point between the virtual ray and a cursor interaction interface, so as to control a cursor.

The second movement angle refers to a movement angle of the virtual ray. For example, when the virtual ray rotates leftward by 1 degree, the second movement angle of the virtual ray is 1 degree.

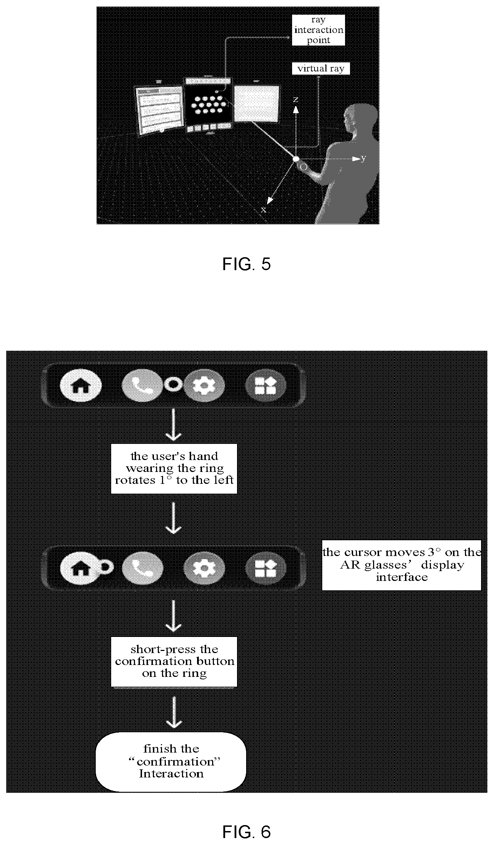

The movement angle and the movement direction of the virtual ray may be represented by using a preset ray reference coordinate system (for example, a coordinate system established with a ray starting point as an origin, a horizontal line parallel to a cursor interaction interface as the x-axis direction, a direction perpendicular to the horizontal line as the y-axis direction, and a vertical line parallel to the cursor interaction interface as the z-axis direction, as shown in FIG. 5). For example, as shown in FIG. 5, in the preset ray reference coordinate system (where the origin is the ray starting point O and a yoz plane of the coordinate system is parallel to a plane of the cursor interaction interface), a second movement angle and a second movement direction of a cursor may be represented by rotation angles of the virtual ray relative to the x-axis, the y-axis, and the z-axis.

The preset angle relationship is used to indicate a relationship between a first movement angle of the cursor control device and a second movement angle of the virtual ray. The preset angle relationship may be set according to actual application requirements, and specific values of the preset angle relationship are not limited herein. For example, the preset angle relationship may be such that when the first movement angle is rotating by 1 degree, the second movement angle is rotating by 3 degrees.

A3, determining a second movement direction of the virtual ray based on the first movement direction and a preset directional relationship

The preset direction relationship is used to indicate a relationship between a first movement direction of the cursor control device and a second movement direction of the virtual ray. The preset direction relationship may be set according to actual application requirements, and the specific preset direction relationship is not limited herein. For example, when the first movement direction is a clockwise direction relative to the x-axis of a sensor coordinate system, the second movement direction is a clockwise direction relative to the x-axis of a ray reference coordinate system.

For example, the preset direction relationship indicates that: when the cursor control device rotates counterclockwise relative to the x-axis of a sensor coordinate system, the virtual ray rotates counterclockwise relative to the x-axis of a ray reference coordinate system; when the cursor control device rotates clockwise relative to the x-axis of the sensor coordinate system, the virtual ray rotates clockwise relative to the x-axis of the ray reference coordinate system; when the cursor control device rotates counterclockwise relative to the y-axis of the sensor coordinate system, the virtual ray rotates counterclockwise relative to the y-axis of the ray reference coordinate system; and when the cursor control device rotates clockwise relative to the y-axis of the sensor coordinate system, the virtual ray rotates clockwise relative to the y-axis of the ray reference coordinate system. Accordingly, when the first movement direction is counterclockwise relative to the x-axis of the sensor coordinate system, the second movement direction of the cursor is counterclockwise relative to the x-axis of the ray reference coordinate system.

A4, controlling the virtual ray to move based on the second movement angle and the second movement direction.

According to the second movement direction, the virtual ray is controlled to move from a current display position until an included angle between a position of the virtual ray after moving and the current display position reaches the second movement angle. For example, with reference to FIG. 5, when the second movement direction is counterclockwise relative to the x-axis of a ray reference coordinate system and the second movement angle is 3 degrees, the virtual ray is controlled to rotate counterclockwise relative to the x-axis of the ray reference coordinate system from the current display position until an included angle between the position of the virtual ray after moving and the current display position is 3 degrees.

To facilitate a better understanding of how interface interaction is implemented via a virtual ray, a specific example is described below. With reference to FIG. 6 (in which a ring represents a cursor), a cursor control device is a ring, and a cursor interaction interface is a display interface of AR glasses. For example, when a user rotates a finger wearing the ring leftward by 1 degree, the user can determine that the ring rotates counterclockwise by 1 degree relative to the x-axis of a sensor coordinate system in step A1 (for example, a first movement angle is 1 degree and a first movement direction is counterclockwise relative to the x-axis of the sensor coordinate system). Then the user can determine that a second movement angle is 3 degrees and a second movement direction is counterclockwise relative to the x-axis of a ray reference coordinate system in steps A2 to A3. Accordingly, the virtual ray may rotate by 3 degrees counterclockwise relative to the x-axis of the ray reference coordinate system from a current display position, and a cursor moves from a current ray interaction point (such as, an intersection point P1 between the virtual ray at the current display position and the cursor interaction interface) to a target ray interaction point (such as, an intersection point P2 between the virtual ray at a position after moving and the cursor interaction interface). Therefore, when the user rotates the finger wearing the ring leftward by 1 degree, the cursor moves by 3 degrees on the display interface of the AR glasses. In this case, if the user presses a confirmation key on the ring, a confirmation interaction is completed.

Therefore, by determining a second movement angle of the virtual ray based on a first movement angle of the cursor control device and a preset angle relationship, cursor movement can be controlled. In this way, when the movement angle of the cursor control device is relatively small, the movement angle of the virtual ray is relatively large, so as to increase a movement amplitude of the cursor. This reduces the movement range of the cursor control device, so as to reduce the user's need to move the cursor control device (for example, when the cursor control device is a ring, this can reduce movement of a wrist or an arm), so as to alleviate discomfort in controlling the cursor control device and improve convenience of interaction.

Therefore, in a first aspect, by displaying a virtual scene image including a cursor corresponding to a cursor control device, when a reset instruction of the cursor control device is triggered, the cursor of the cursor control device is moved to a preset initial position of a cursor interaction interface. Accordingly, when the cursor is located at a position that is inconvenient for user operation, the cursor can be quickly restored to a default position via the reset instruction (for example, when a user holds the cursor control device near a thigh and the cursor is located at a lower position of the cursor interaction interface, the cursor can be directly restored to a center position of the interface via the reset instruction without requiring the user to raise an arm or wrist). Thus, it is unnecessary for the user to move the arm or the wrist to a specific height or angle to adjust the cursor position, so as to avoid large and prolonged movements and improving convenience of interaction. In a second aspect, when the cursor control device moves, the cursor is controlled to move from the preset initial position to other positions on the cursor interaction interface. Accordingly, the user can operate the cursor control device in a relatively comfortable posture to control cursor movement for interaction, so as to further improve convenience of cursor interaction.

As shown in FIG. 5, in order to improve intuitiveness and visibility of interaction, the virtual scene image further includes a virtual wearing object corresponding to the cursor control device. A direction of the virtual ray is consistent with a pointing direction of the virtual wearing object. A starting point of the virtual ray (namely, a ray starting point) coincides with a position of the cursor control device that is worn by the virtual wearing object. An intersection point between the virtual ray and the cursor interaction interface is displayed as a cursor. When an actual wearing object of the cursor control device changes the pointing direction (for example, when the cursor control device is a ring, a pointing direction of a finger wearing the ring changes), the direction of the virtual ray changes accordingly, so as to provide intuitive visual feedback to the user, improving visibility of interaction, and enabling the user to clearly perceive the current interaction.

To improve convenience of cursor interaction, the method for controlling interface interaction may further include: when a reset instruction of the cursor control device is triggered, moving the cursor to a preset initial position of the cursor interaction interface.

The preset initial position is a default position of a cursor of the cursor control device on the cursor interaction interface. For example, the preset initial position may be a center point of the cursor interaction interface.

When the cursor is located at the preset initial position, the virtual ray is located at a preset default position, and an intersection point between the virtual ray at the default position and the cursor interaction interface is the preset initial position.

The reset instruction is configured to control the cursor to return to the preset initial position. The reset instruction may be triggered in various manners. For example, the reset instruction may be triggered when a reset button of the cursor control device is pressed, or when a detected user gesture matches a preset gesture.

For example, as shown in FIG. 3, it is assumed that a preset initial position of the cursor is a center point P of the cursor interaction interface. Before a reset instruction of the cursor control device is triggered, the cursor is located at a point A on the cursor interaction interface. When the reset instruction of the cursor control device is triggered, the cursor is restored to the preset initial position, namely, the center point P of the cursor interaction interface.

The reset instruction of the cursor control device may be triggered in various manners. In some embodiments, the manners include following situations.
(1) When a preset gesture of the user for resetting a cursor position is detected, a reset instruction of the cursor control device is triggered, and the cursor is reset to a preset initial position of the cursor interaction interface. In this case, "moving the cursor to the preset initial position of the cursor interaction interface in response to triggering the reset instruction of the cursor control device" may specifically include following steps:
   2021A, obtaining a user interaction image;
   2022A, performing gesture recognition on the user interaction image to obtain a gesture of the user interaction image;
   2023A, in response to the gesture of the user interaction image matching a preset gesture, triggering the reset instruction of the cursor control device; and
   2024A, in response to triggering the reset instruction, moving the cursor of the cursor control device to the preset initial position of the cursor interaction interface.
(2) A reset button is provided at the cursor control device; when a user presses the reset button, a reset instruction of the cursor control device is triggered, and the cursor is reset to a preset initial position of the cursor interaction interface. In this case, "moving the cursor to the preset initial position of the cursor interaction interface in response to triggering the reset instruction of the cursor control device" may specifically include following steps:
   2021B, in response to receiving a cursor reset request sent by the cursor control device, triggering the reset instruction of the cursor control device; the cursor control device sending the cursor reset request upon detecting a touch operation on the reset button; and
   2022B, in response to triggering the reset instruction of the cursor control device, moving the cursor of the cursor control device to the preset initial position of the cursor interaction interface.
(3) A user gesture is acquired by the cursor control device (for example, a ring); when a preset gesture for resetting a cursor position is detected, a reset instruction of the cursor control device is triggered, and the cursor is reset to a preset initial position of the cursor interaction interface. In this case, step 202 may specifically include following steps:
   2021C, in response to receiving a cursor reset request sent by the cursor control device, triggering the reset instruction of the cursor control device; the cursor control device sending the cursor reset request upon detecting the preset gesture; and
   2022C, in response to triggering the reset instruction, moving the cursor of the cursor control device to the preset initial position of the cursor interaction interface.

Further, to improve interaction efficiency, when a cursor corresponding to a virtual ray approaches an interactive object, such as a control, text, or a functional area, the cursor may be controlled to automatically snap to the interactive object. That is, the method for controlling interface interaction may further include: determining, on the cursor interaction interface, a target interactive object that is closest to a target ray interaction point; and when a distance between the target ray interaction point and the target interactive object is less than a preset distance threshold, controlling the cursor to move onto the target interactive object.

The interactive object includes at least one of a control, text, or a functional area.

The target interactive object refers to an interactive object that is closest to the target ray interaction point among interactive objects on the cursor interaction interface.

In an embodiment, after the target interactive object is determined, the cursor may be directly snapped to the target interactive object.

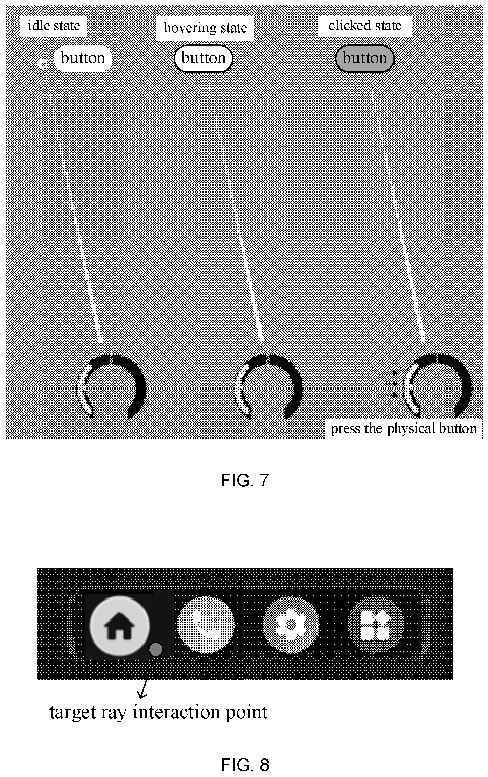

In another embodiment, as shown in FIG. 8, taking an interactive object as a clickable control as an example, it is assumed that four clickable controls (as shown in FIG. 8, from left to right are: control 1, control 2, control 3, and control 4) are provided on the cursor interaction interface. A control closest to a target ray interaction point among the four clickable controls (for example, control 1) is determined as a target interactive object. When a distance between the target ray interaction point and the control 1 on the cursor interaction interface is less than a preset distance threshold, the cursor is controlled to snap to the control 1, so as to improve selection efficiency of controls.

As another example, taking an interactive object as text as an example, it is assumed that four selectable texts (for example, text 1, text 2, text 3, text 4) are provided on the cursor interaction interface. text closest to the target ray interaction point (for example, "text 1") is determined as the target interactive object among the four selectable texts. When a distance between the target ray interaction point and the "text 1" on the cursor interaction interface is less than the preset distance threshold, the cursor is controlled to snap to the "text 1" (for example, a character or a word of the text), so as to improve text selection efficiency and facilitating document editing, text selection, and cursor positioning.

For another example, taking an interactive object as a functional area as an example, it is assumed that four clickable functional areas (functional area 1, functional area 2, functional area 3, and functional area 4) are provided on the cursor interaction interface. A functional area closest to a target ray interaction point (for example, clickable functional area 4) is determined as a target interactive object among the four functional areas. When a distance between the target ray interaction point and the functional area 4 on the cursor interaction interface is less than a preset distance threshold, the cursor is controlled to snap to the functional area 4, so as to improve selection efficiency of functional areas. Further, when a functional area includes a plurality of functional sub-areas, a target functional sub-area that is closest to the target ray interaction point may be determined from the plurality of functional sub-areas, and the cursor is controlled to move to the target functional sub-area. A distance between a central pixel of the functional sub-area and the target ray interaction point can be used as a distance between a functional sub-area and the target ray interaction point.

Furthermore, to emphasize a snapping effect of the cursor, when the cursor is snapped to a target interactive object, the target interactive object may be visually highlighted. In addition, different highlighting effects may be applied to different types of target interactive objects. For example, when the cursor is snapped to an icon or a tab without a background, a highlight effect may be applied; when the cursor is snapped to a button or a list with a background, an elevation effect may be applied; and when the cursor is snapped to an application icon, a floating effect may be applied.

Further, to prevent loss of the cursor, if the user does not move the cursor for a certain period of time, the cursor may be automatically snapped to a preset resting position of the cursor interaction interface. That is, the method for controlling interface interaction may further include: in response to when a duration of the cursor remaining at the target ray interaction point exceeds a preset duration, controlling the cursor to move to a preset resting position on the cursor interaction interface. For example, when the preset resting position is an edge of the cursor interaction interface, if the cursor remains at the target ray interaction point for more than 20 seconds, the cursor is automatically snapped to the edge of the cursor interaction interface.

Further, to improve intuitiveness of interaction presentation and enable a user to clearly perceive a current interaction state, when an intersection point between a virtual ray and a cursor interaction interface is located on an interactive control, the interactive control may be visually emphasized (for example, enlarged or color-changed). That is, the method for controlling interface interaction may further include: in response to a target ray interaction point being located on an interactive control, visually emphasizing the interactive control on the cursor interaction interface. For example, when the intersection point between the virtual ray and the cursor interaction interface falls on a button, the button is displayed in an enlarged size and with a changed color.

Further, the cursor control device is a wearable device. As shown in FIG. 7, after a user wears the cursor control device (for example, a ring), the user may perform interface interaction via a ray interaction point. For example, when the ray interaction point is located on a target selected by the user (for example, a button, a functional area, or text), the user may perform various interaction operations, such as confirmation, return, and scrolling, by pressing or sliding a touch strip of the ring.

Further, to improve visuality of interaction of a ray interaction point, an interactive object may have multiple states including an idle state, a hovering state, and a clicked state, and display styles of the interactive object differ in each state. That is, the method for controlling interface interaction may further include: when the ray interaction point is not positioned on an interactive object of the cursor interaction interface, displaying the interactive object in a first display state; or when a duration of the ray interaction point remaining on an interactive object of the cursor interaction interface exceeds a preset hovering duration, displaying the interactive object in a second display state; at least one of a size, a color, or a style of the interactive object in the second display state differing from a corresponding one in the first display state; or when the ray interaction point is positioned on an interactive object of the cursor interaction interface and the interactive object is triggered, displaying the interactive object in a third display state; at least one of a size, a color, or a style of the interactive object in the third display state differing from a corresponding one in the second display state.

As shown in FIG. 7, when a ray interaction point (for example, a cursor) is not located on an interactive object (for example, a button), the interactive object is in an idle state, and the control is displayed in a first display state. When the ray interaction point (for example, the cursor) is located on an interactive object (for example, a button) but no operation instruction for the interactive object is issued (for example, a "confirm" operation is not performed), the interactive object is in a hovering state, and the control is displayed in a second display state. When the ray interaction point (for example, the cursor) is located on an interactive object (for example, a button) and an operation instruction for the interactive object is issued (for example, a physical "confirm" button on a ring is pressed), the interactive object is in a clicked state, and the control is displayed in a third display state.

It can be seen from the above that, in this embodiment, a virtual scene image including a cursor of a cursor control device is displayed, and the cursor of the cursor control device is displayed on a cursor interaction interface based on a current ray interaction point. When the cursor control device moves, the cursor is controlled to move from a current ray interaction point to a target ray interaction point, such that the cursor is displayed at an intersection point between a virtual ray and the cursor interaction interface. Accordingly, the user can perceive that the virtual ray moves along with the cursor control device, and the cursor position changes with the ray interaction point, so as to enable the user to perceive a variation rule of the cursor position, improving intuitiveness of interface interaction and efficiency of interaction operations.

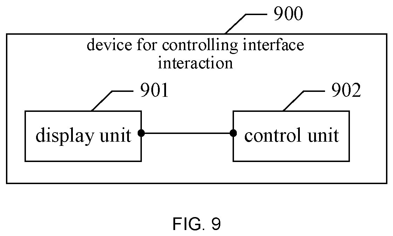

Furthermore, to better implement the method for controlling interface interaction in the embodiments of the present application, based on the method for controlling interface interaction, the present application further provides a device for controlling interface interaction, as shown in FIG. 9, which is a schematic structural diagram of a device for controlling interface interaction according to an embodiment of the present application. The device for controlling interface interaction 900 includes:
a display unit 901, configured to display a virtual scene image; where the virtual scene image includes a cursor interaction interface and a virtual ray of a cursor control device; and
a control unit 902, configured to display a cursor of the cursor control device on the cursor interaction interface based on a current ray interaction point; where the current ray interaction point is an intersection point between the virtual ray positioned at a current display position and the cursor interaction interface; and the control unit 902 is further configured to control the cursor to move from the current ray interaction point to a target ray interaction point when the cursor control device moves.

In some embodiments, the control unit 902 is configured to control the virtual ray to move based on movement data of the cursor control device; where the target ray interaction point corresponds to an intersection point between the virtual ray positioned at a position after moving and the cursor interaction interface.

In some embodiments, the control unit 902 is configured to:
obtain a first movement angle and a first movement direction of the cursor control device when the cursor control device moves;
determine a second movement angle of the virtual ray of the cursor control device based on the first movement angle and a preset angle relationship;
determine a second movement direction of the virtual ray based on the first movement direction and a preset directional relationship; and
control the virtual ray to move based on the second movement angle and the second movement direction.

In some embodiments, the control unit 902 is configured to:
control the virtual ray to move from the current display position along the second movement direction, until an angle between a position of the virtual ray after moving and the current display position of the virtual ray reaches the second movement angle.

In some embodiments, the control unit 902 is configured to:
move the cursor to a preset initial position on the cursor interaction interface in response to triggering a reset instruction of the cursor control device; where when the cursor is positioned at the preset initial position, the virtual ray is positioned at a preset default position, and an intersection point between the virtual ray at the default position and the cursor interaction interface corresponds to the preset initial position.

In some embodiments, the control unit 902 is configured to:
determine a target interactive object closest to the target ray interaction point on the cursor interaction interface; and
control the cursor to move to the target interactive object when a distance between the target ray interaction point and the target interactive object is less than a preset distance threshold; where the target interactive object includes at least one of a control, text, or a functional area.

In some embodiments, the target interactive object is the functional area; the functional area includes a plurality of functional sub-areas; the control unit 902 is configured to:
determine a target functional sub-area closest to the target ray interaction point among the plurality of functional sub-areas of the functional area; and
control the cursor to move to the target functional sub-area.

In some embodiments, the control unit 902 is configured to:
control the cursor to move to a preset resting position on the cursor interaction interface when a duration of the cursor remaining at the target ray interaction point exceeds a preset duration.

In some embodiments, the control unit 902 is configured to:
when the ray interaction point is not positioned on an interactive object of the cursor interaction interface, display the interactive object in a first display state; or
when a duration of the ray interaction point remaining on an interactive object of the cursor interaction interface exceeds a preset hovering duration, display the interactive object in a second display state; where at least one of a size, a color, or a style of the interactive object in the second display state differs from a corresponding one in a first display state; or
when the ray interaction point is positioned on an interactive object of the cursor interaction interface and the interactive object is triggered, display the interactive object in a third display state; where at least one of a size, a color, or a style of the interactive object in the third display state differs from a corresponding one in a second display state.

In specific implementation, the above units may be implemented as independent entities, or may be combined in any manner to be implemented as one or more entities. Specific implementations of the above units may refer to the embodiments of the method for controlling interface interaction described above, which will not be repeated herein.

Those skilled in the art may understand that all or part of the steps in the method for controlling interface interaction described above may be implemented by instructions, or by controlling related hardware via instructions. The instructions may be stored in a computer-readable storage medium and loaded and executed by a processor.

The present application provides a computer-readable storage medium storing multiple computer programs. These computer programs can be loaded by a processor to execute any embodiment of the method for controlling interface interaction in the present application.

The computer-readable storage medium may include: a read-only memory (ROM), a random access memory (RAM), a disk, or an optical disk, and the like.

In the above embodiments of the device for controlling interface interaction, the computer-readable storage medium, and the wearable device, the descriptions of each embodiment have different focuses. For parts not described in detail in a certain embodiment, reference may be made to the corresponding descriptions in other embodiments. It can be clearly understood by those skilled in the art that, for convenience and conciseness of description, the specific working processes and beneficial effects of the device for controlling interface interaction, the computer-readable storage medium, the wearable device, and the respective units described above may refer to the descriptions of the embodiments of the method for controlling interface interaction, which will not be repeated herein.

The method for controlling interface interaction, the device, the wearable device, and the computer-readable storage medium provided in the embodiments of the present application have been described in detail above. Some embodiments are used herein to illustrate the principles and implementations of the present application, and the descriptions of the above embodiments are intended to facilitate understanding of the method and core concepts of the present application. For those skilled in the art, various modifications and variations may be made to the specific implementations and application scope based on the concepts of the present application. Therefore, the content of this specification should not be construed as limiting the present application.

## Claims

1. A method for controlling interface interaction, **characterized by** comprising:
displaying a virtual scene image; wherein the virtual scene image comprises a cursor interaction interface and a virtual ray of a cursor control device;
displaying a cursor of the cursor control device on the cursor interaction interface based on a current ray interaction point; wherein the current ray interaction point is an intersection point between the virtual ray at a current display position and the cursor interaction interface; and
controlling the cursor to move from the current ray interaction point to a target ray interaction point when the cursor control device moves.

2. The method for controlling interface interaction according to claim 1, further comprising:
controlling the virtual ray to move based on movement data of the cursor control device; wherein the target ray interaction point is an intersection point between the virtual ray at a position after moving and the cursor interaction interface.

3. The method for controlling interface interaction according to claim 2, wherein controlling the virtual ray to move based on the movement data of the cursor control device comprises:
when the cursor control device moves, obtaining a first movement angle and a first movement direction of the cursor control device;
determining a second movement angle of the virtual ray of the cursor control device based on the first movement angle and a preset angle relationship;
determining a second movement direction of the virtual ray based on the first movement direction and a preset direction relationship; and
controlling the virtual ray to move based on the second movement angle and the second movement direction.

4. The method for controlling interface interaction according to claim 3, wherein controlling the virtual ray to move based on the second movement angle and the second movement direction comprises:
controlling the virtual ray to move from the current display position along the second movement direction, until an angle between the position of the virtual ray after moving and the current display position of the virtual ray reaches the second movement angle.

5. The method for controlling interface interaction according to claim 1, further comprising:
in response to triggering a reset instruction of the cursor control device, moving the cursor to a preset initial position on the cursor interaction interface; wherein when the cursor is positioned at the preset initial position, the virtual ray is positioned at a preset default position, and an intersection point between the virtual ray at the default position and the cursor interaction interface is the preset initial position.

6. The method for controlling interface interaction according to claim 1, further comprising:
determining a target interactive object closest to the target ray interaction point on the cursor interaction interface; and
when a distance between the target ray interaction point and the target interactive object is less than a preset distance threshold, controlling the cursor to move to the target interactive object; wherein the target interactive object comprises at least one of a control, text, or a functional area.

7. The method for controlling interface interaction according to claim 6, wherein the target interactive object is the functional area; the functional area comprises a plurality of functional sub-areas, and controlling the cursor to move to the target interactive object comprises:
determining a target functional sub-area closest to the target ray interaction point among the plurality of functional sub-areas of the functional area; and
controlling the cursor to move to the target functional sub-area.

8. The method for controlling interface interaction according to claim 1, further comprising:
when a duration of the cursor remaining at the target ray interaction point exceeds a preset duration, controlling the cursor to move to a preset resting position on the cursor interaction interface.

9. The method for controlling interface interaction according to claim 1, further comprising:
when the ray interaction point is not positioned on an interactive object of the cursor interaction interface, displaying the interactive object in a first display state; or
when a duration of the ray interaction point remaining on an interactive object of the cursor interaction interface exceeds a preset hovering duration, displaying the interactive object in a second display state; wherein at least one of a size, a color, or a style of the interactive object in the second display state differs from a corresponding one in the first display state; or
when the ray interaction point is positioned on an interactive object of the cursor interaction interface and the interactive object is triggered, displaying the interactive object in a third display state; wherein at least one of a size, a color, or a style of the interactive object in the third display state differs from a corresponding one in the second display state.

10. A device for controlling interface interaction, **characterized by** comprising:
a display unit, configured to display a virtual scene image; wherein the virtual scene image comprises a cursor interaction interface and a virtual ray of a cursor control device; and
a control unit, configured to display a cursor of the cursor control device on the cursor interaction interface based on a current ray interaction point; wherein the current ray interaction point is an intersection point between the virtual ray positioned at a current display position and the cursor interaction interface; and the control unit is further configured to control the cursor to move from the current ray interaction point to a target ray interaction point when the cursor control device moves.

11. The device for controlling interface interaction according to claim 10, wherein the control unit is configured to:
control the virtual ray to move based on movement data of the cursor control device; wherein the target ray interaction point is an intersection point between the virtual ray positioned at a position after moving and the cursor interaction interface.

12. The device for controlling interface interaction according to claim 11, wherein the control unit is configured to:
obtain a first movement angle and a first movement direction of the cursor control device when the cursor control device moves;
determine a second movement angle of the virtual ray of the cursor control device based on the first movement angle and a preset angle relationship;
determine a second movement direction of the virtual ray based on the first movement direction and a preset direction relationship; and
control the virtual ray to move based on the second movement angle and the second movement direction.

13. The device for controlling interface interaction according to claim 12, wherein the control unit is configured to:
control the virtual ray to move from the current display position along the second movement direction, until an angle between the position of the virtual ray after moving and the current display position of the virtual ray reaches the second movement angle.

14. The device for controlling interface interaction according to claim 10, wherein the control unit is configured to:
move the cursor to a preset initial position on the cursor interaction interface in response to triggering a reset instruction of the cursor control device; wherein when the cursor is positioned at the preset initial position, the virtual ray is positioned at a preset default position, and an intersection point between the virtual ray at the default position and the cursor interaction interface is the preset initial position.

15. The device for controlling interface interaction according to claim 10, wherein the control unit is configured to:
determine a target interactive object closest to the target ray interaction point on the cursor interaction interface; and
control the cursor to move to the target interactive object when a distance between the target ray interaction point and the target interactive object is less than a preset distance threshold; wherein the target interactive object comprises at least one of a control, text, or a functional area.

16. The device for controlling interface interaction according to claim 15, wherein the target interactive object is the functional area; the functional area comprises a plurality of functional sub-areas; the control unit is configured to:
determine a target functional sub-area closest to the target ray interaction point among the plurality of functional sub-areas of the functional area; and
control the cursor to move to the target functional sub-area.

17. The device for controlling interface interaction according to claim 10, wherein the control unit is configured to:
control the cursor to move to a preset resting position on the cursor interaction interface when a duration of the cursor remaining at the target ray interaction point exceeds a preset duration.

18. The device for controlling interface interaction according to claim 10, wherein the control unit is configured to:
when the ray interaction point is not positioned on an interactive object of the cursor interaction interface, display the interactive object in a first display state; or
when a duration of the ray interaction point remaining on an interactive object of the cursor interaction interface exceeds a preset hovering duration, display the interactive object in a second display state; wherein at least one of a size, a color, or a style of the interactive object in the second display state differs from a corresponding one in a first display state; or
when the ray interaction point is positioned on an interactive object of the cursor interaction interface and the interactive object is triggered, display the interactive object in a third display state; wherein at least one of a size, a color, or a style of the interactive object in the third display state differs from a corresponding one in a second display state.

19. A wearable device, **characterized by** comprising a processor and a memory, wherein the memory stores a computer program; when the processor calls the computer program in the memory, the processor implements the method for controlling interface interaction according to any one of claims 1 to 9.

20. A computer-readable storage medium, **characterized by** storing a computer program, wherein the computer program is loaded by a processor to implement the method for controlling interface interaction according to any one of claims 1 to 9.
